# EUROPEAN PATENT APPLICATION

(11) **EP 3 925 936 A1**
(43) Date of publication of application: **22.12.2021**
(21) Application number: 21171060.3
(22) Date of filing: 28.04.2021
(51) Int. Cl.: C03B 37/029

(54) **OPTICAL FIBRE DRAW FURNACE**

(30) Priority: 19.06.2020 IN 202011026012
(71) Applicant: Sterlite Technologies Limited, Haryana 122002 (IN)
(72) Inventor: PAWALE, Anant Arjun, 122002 Haryana (IN)
(74) Representative: Hepworth Browne

(57) **Abstract**

An optical fibre draw furnace (100) includes a hollow cylindrical structure (102), one or more heating elements (106) and a sealing felt (108). The one or more heating elements (106) are situated at periphery of the hollow cylindrical structure (102). The one or more heating elements (106) are utilized for melting the glass preform (104). The sealing felt (108) is positioned at a pre-defined distance above the optical fibre draw furnace (100). The sealing felt (108) includes a first opening (110) and a second opening (112). The first opening (110) is utilized to hold the glass preform (104). The first opening (110) allows passing of the glass preform (104) inside the optical fibre draw furnace (100). The second opening (112) facilitates in input of gas inside the optical fibre draw furnace (100).

## Description

### BACKGROUND OF THE INVENTION

### Field of the Invention.

The present disclosure relates to the field of optical fibre draw furnace and, in particular, relates to an apparatus for sealing top of the optical fibre draw furnace.

### Description of Prior Art

With the advancement in science and technology, various modern technologies are being employed for communication purposes. One of the most important modern communication technologies is optical fibre communication technology using a variety of optical fibre cables. In addition, the optical fibre cables are widely used for communication to meet the increasing demands. Further, manufacturing of optical fibres for the optical fibre cables becomes essential. Furthermore, the optical fibres are manufactured from a quartz-based optical fibre glass preform moving downward from an upper opening of a drawing furnace. Moreover, the optical fibre glass preform enters the drawing furnace. Also, diameter of the optical fibre glass preform decreases using heating and melting of distal end of the optical fibre glass preform. Also, the optical fibres are drawn from a lower opening of the drawing furnace. Also, atmospheric air is prevented from entering inside the drawing furnace. In addition, positive pressure is maintained inside the drawing furnace. Further, the drawing furnace should remain airtight. Also, the airtightness is maintained by a sealing gap between the upper opening of the drawing furnace and the optical fibre glass preform. Also, the atmospheric air and amount of inert gases affect life of the drawing furnace. Also, the inert gases include nitrogen gas, argon gas, helium gas, and the like. Hence, a seal is utilized to close gap between the upper opening of the drawing furnace and the optical fibre glass preform.

Conventionally, graphite felt is utilized to seal the drawing furnace. In addition, conventional seal is positioned near to heat chamber of the drawing furnace. Further, the conventional seal deteriorates when small amount of atmospheric air enters the drawing furnace. The conventional seal is inefficient to handle high drawing speed and heavy optical fibre glass preform. The conventional seal affects drawing parameters of the drawing furnace when deterioration starts. Also, the conventional seal affects optical parameters of the optical fibres manufactured in the drawing furnace when deterioration starts. The conventional seal is continuously exposed to high temperature of the drawing furnace. Also, the conventional seal affects insertion of the inert gases in the drawing furnace when deterioration starts. Some of the prior art references are given below:

US20190292087A1 discloses an optical fiber preform manufacturing apparatus comprising a seal member. The seal member is attached to a flange portion formed in an open portion of a reaction chamber into which a burner is inserted. In addition, the optical fiber preform manufacturing apparatus has the burner inserted into the reaction chamber through the open portion of the seal member to generate and deposit glass microparticles.

EP1159229A1 discloses an apparatus and method for sealing the bottom of an optical waveguide draw furnace. The apparatus includes an assembly constructed and arranged to mate with bottom of the optical waveguide draw furnace to form a seal. In addition, the apparatus includes a leak detection system communicating with the assembly to determine if the seal leaks. Further, the assembly includes a covering plate having a top surface. Furthermore, the top surface of the covering plate of the optical waveguide draw furnace includes a first gasket and a second gasket radially spaced from the first gasket.

EP1159228A1 discloses an apparatus and method for sealing top of an optical waveguide fiber draw furnace. The apparatus includes an assembly constructed and arranged to removably cover the top of the optical waveguide fiber draw furnace and mate with a downfeed handle. In addition, the assembly comprising an elongated sleeve having a base and defining a chamber. Further, the assembly includes an inert gas supply communicating with the assembly to selectively deliver inert gas into the chamber of the optical waveguide fiber draw furnace. Furthermore, the assembly includes a sealing mechanism supported by the elongated sleeve to mate with the downfeed handle for cooperating with the top of the optical waveguide fiber draw furnace to prevent air from entering the optical waveguide fiber draw furnace.

US10487001B2 discloses a seal structure of an optical fiber drawing furnace. The seal structure seals a gap between an upper end opening of the optical fiber drawing furnace.

While the prior arts cover various approaches to seal a gap between the upper opening of the drawing furnace and the optical fibre glass preform, there are no significant considerations to position the seal at a tolerable distance from the heat chamber of the drawing furnace. In light of the above-stated discussion, there is a need to overcome the above stated disadvantages.

### SUMMARY OF THE INVENTION

In an aspect, the present disclosure provides an optical fibre draw furnace. The optical fibre draw furnace includes a hollow cylindrical structure. In addition, the optical fibre draw furnace includes one or more heating elements. Further, the optical fibre draw furnace includes a sealing felt. The hollow cylindrical structure includes a glass preform positioned inside the hollow cylindrical structure. The glass preform has diameter greater than 50 millimetres. The one or more heating elements are situated at periphery of the hollow cylindrical structure. The one or more heating elements are utilized for melting the glass preform. The sealing felt is positioned above the optical fibre draw furnace. The sealing felt is positioned at a pre-defined distance above the optical fibre draw furnace. The sealing felt includes a first opening. The sealing felt includes a second opening. The first opening is utilized to hold the glass preform. The first opening allows passing of the glass preform inside the optical fibre draw furnace. The second opening facilitates in input of gas inside the optical fibre draw furnace. The second opening facilitates in avoiding deterioration of the optical fibre draw furnace. The optical fibre draw furnace supports high speed drawing of the glass preform at drawing speed in range of 2500 metre per second to 3500 metre per second. The position of the sealing felt in the optical fibre draw preform facilitates in improving properties of the optical fibre.

A primary object of the present disclosure is to provide an apparatus for sealing top of the optical fibre draw furnace.

Another object of the present disclosure is to provide adjustable apparatus for sealing top of the optical fibre draw furnace.

Y et another object of the present disclosure is to provide the optical fibre draw furnace that improves properties of glass preform.

In an embodiment of the present disclosure, the sealing felt is retrofitted on standard optical fibre draw furnace without requirement of additional adjustments.

In an embodiment of the present disclosure, the pre-defined distance is in range of 10 centimetres to 20 centimetres.

In an embodiment of the present disclosure, the sealing felt supports the glass preform with diameter in range of 100 millimetres to 150 millimetres.

In an embodiment of the present disclosure, the gas includes at least one of nitrogen, helium, and argon.

In an embodiment of the present disclosure, the optical fibre draw furnace facilitates in reduction of scrap, wherein the scrap comprising at least one of optical rejection, draw rejection, and PT (prof testing of optical fibre) rejection.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates a cross sectional view of an optical fibre draw furnace, in accordance with various embodiments of the present disclosure;
FIG. 2 illustrates a first chart of scrap percentage in the optical fibre draw furnace, in accordance with an embodiment of the present disclosure;
FIG. 3 illustrates a second chart of drawing breaks in the optical fibre draw furnace, in accordance with an embodiment of the present disclosure; and
FIG. 4 illustrates a third chart of PT breaks in the optical fibre draw furnace, in accordance with an embodiment of the present disclosure.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. The optical fibre draw furnace.
102. The hollow cylindrical structure.
104. Glass preform.
106. The one or more heating elements.
108. The sealing felt.
110. The first opening.
112. The second opening.
114. The heat chamber.
116. The lower opening.
118. The optical fibre.
120. The pyrometer.
122. The insulation zone.
200. The first chart.
300. The second chart.
400. The third chart.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

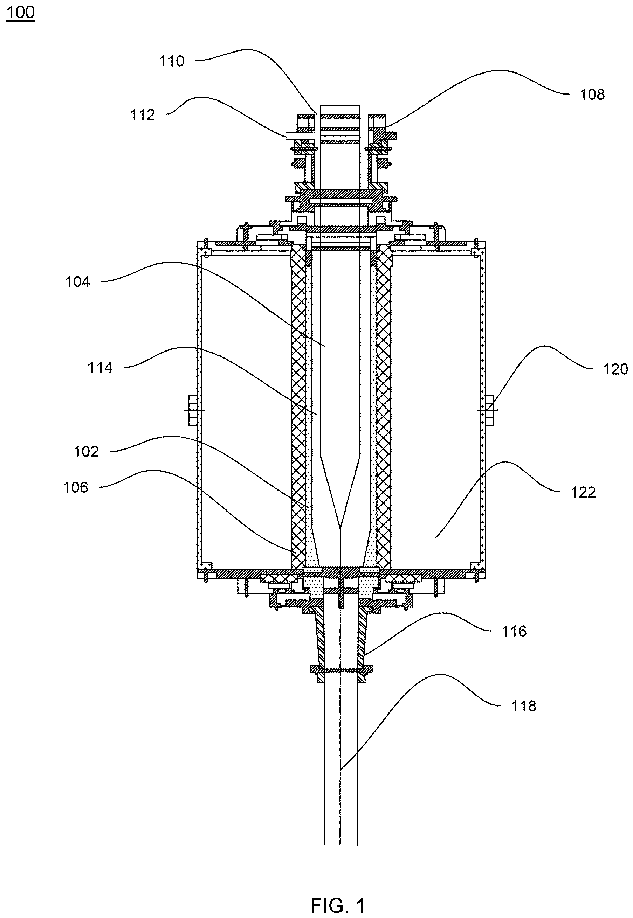

According to FIG. 1, this is a cross sectional view of an optical fibre draw furnace 100, in accordance with various embodiments of the present disclosure. The optical fibre draw furnace 100 includes a hollow cylindrical structure 102, a glass preform 104, one or more heating elements 106, and a sealing felt 108. In addition, the optical fibre draw furnace 100 includes a heat chamber 114, a lower opening 116, an optical fibre 118, a pyrometer 120, and an insulation zone 122.

The optical fibre draw furnace 100 is an induction furnace used for heating the glass preform 104 in order to draw the optical fibre 118 therefrom. The sealing felt 108 includes a first opening 110 and a second opening 112. The optical fibre draw furnace 100 includes the glass preform 104. The glass preform 104 is a piece of glass that facilitates drawing of the optical fibre 118. In addition, the glass preform 104 is a solid glass rod that is used to manufacture the optical fibre 118. In addition, the optical fibre 118 is a flexible, transparent fibre made by drawing glass or plastic to a diameter slightly thicker than that of a human hair. Further, the optical fibre 118 refers to medium or technology used for transmission of information as light pulses over large distances.

The hollow cylindrical structure 102 includes the glass preform 104. The hollow cylindrical structure 102 is utilized to cover the glass preform 104 during drawing of the optical fibre 118 from the glass preform 104. The hollow cylindrical structure 102 protects the glass preform 104 from external environment during drawing of the optical fibre 118 from the glass preform 104. The glass preform 104 has diameter greater than about 50 millimetres. In an embodiment of the present disclosure, the diameter of the glass preform 104 may vary.

The optical fibre draw furnace 100 includes the one or more heating elements 106. The one or more heating elements 106 are situated at periphery of the hollow cylindrical structure 102. The one or more heating elements 106 provide heat to the hollow cylindrical structure 102 of the optical fibre draw furnace 100. The one or more heating elements 106 are utilized to melt the glass preform 104 to manufacture the optical fibre 118 during drawing.

The one or more heating elements 106 surround the hollow cylindrical structure 102. In an embodiment of the present disclosure, the one or more heating elements 106 are cylindrical in shape. In another embodiment of the present disclosure, shape of the one or more heating elements may vary.

The optical fibre draw furnace 100 includes the sealing felt 108. The sealing felt 108 is positioned above the optical fibre draw furnace 100. The sealing felt 108 seals a gap above the optical fibre draw furnace 100. The sealing felt 108 is positioned at a pre-defined distance above the optical fibre draw furnace 100. The pre-defined distance is in range of 10 centimetres to 20 centimetres. In an embodiment of the present disclosure, range of the pre-defined distance may vary.

In an embodiment of the present disclosure, the sealing felt 108 supports the glass preform 104 with diameter in range of 100 millimetres to 150 millimetres. In another embodiment of the present disclosure, the sealing felt 108 supports the glass preform 104 with any other diameter of the like.

The sealing felt 108 includes the first opening 110. The first opening 110 is utilized to hold the glass preform 104. The first opening 110 allows passing of the glass preform 104 inside the optical fibre draw furnace 100 through the sealing felt 108. The sealing felt 108 includes the second opening 112. The second opening 112 facilitates in input of gas inside the optical fibre draw furnace 100. In addition, the second opening 112 facilitates to avoid deterioration of the optical fibre draw furnace 100. The gas includes at least one of nitrogen, helium, and argon. In an embodiment of the present disclosure, the gas may vary.

In an embodiment of the present disclosure, the sealing felt 108 is cylindrical in shape. In another embodiment of the present disclosure, shape of the sealing felt 108 may vary. In an embodiment of the present disclosure, the optical fibre draw furnace 100 supports high speed drawing of the glass preform 104 at drawing speed in range of 2500 metre per second to 3500 metre per second. In another embodiment of the present disclosure, speed of drawing of the glass preform 104 may vary. The position of the sealing felt 108 in the optical fibre draw furnace 100 facilitates to improve properties of the optical fibre 118.

Proof testing or PT is a common technique to ensure minimum strength of optical fibre 118 and eliminate the flaws whose sizes are dependent on the stress applied during proof testing. In proof testing, predetermined load is applied on optical fibre 118 by tensile loading. The optical fibre breaks at the weak points and the weak parts are eliminated from the optical fibre 118. The proof test will guarantee a minimum strength level (i.e. above proof testing stress) of the optical fibre 118 and lifetime.

In an embodiment of the present disclosure, draw parameters include but may not be limited to stress, strain rate, temperature, thickness, co-efficient of friction, drawing speed and holding force. Stress may be termed as non-specific response of the optical fibre 118 to any demand for change. Strain rate may be termed as change in deformation of the optical fibre 118 with respect to time. Temperature is degree or intensity of heat in any substance or object. Further, thickness is measurement of distance though an object. Furthermore, co-efficient of friction is a dimensionless number that is defined as a ratio between friction force and normal force. The drawing speed depends on the glass preform 104, type of the optical fibre 118 and the optical fibre draw furnace 100.

In an embodiment of the present disclosure, the optical parameters include but may not be limited to attenuation, dispersion, mode-field diameter, and cut-off wavelength. Attenuation refers to rate at which signal light decreases in intensity inside the optical fibre 118. Dispersion refers to spreading of light pulse as it travels down the length of the optical fibre 118. Mode-field diameter is an expression of distribution of irradiance, i.e., optical power per unit area, across the end face of the optical fibre 118. Cut-off wavelength is minimum wavelength in which the optical fibre 118 acts as single mode optical fibre. Single mode optical fibre is an optical fibre designed to carry only a single mode of light.

The optical fibre draw furnace 100 includes the heat chamber 114. The heat chamber 114 continuously provides heat to the glass preform 104. The heat chamber 114 provides heat to the glass preform 104 to partially melt the glass preform 104. The lower opening 116 is opening that allows the optical fibre 118 to pass after completion of the drawing process.

The optical fibre draw furnace 100 includes the pyrometer 120. The pyrometer 120 is a type of remote sensing thermometer that is used to measure temperature. The pyrometer 120 is installed in the optical fibre draw furnace 100 to measure temperature. The optical fibre draw furnace 100 includes the insulation zone 122.

The insulation zone 122 is utilized to retain heat inside the optical fibre draw furnace 100. The insulation zone 122 is made up of one or more insulators. The insulators are materials that inhibit flow of electric current. In an example, the insulators include fiberglass, foam insulation, thermal flask, Styrofoam, and the like. The insulation zone 122 retains heat inside the optical fibre draw furnace 100 to quickly perform drawing of the optical fibre 118.

In an embodiment of the present disclosure, the sealing felt 108 is retrofitted on standard optical fibre draw furnace 100 without requirement of additional adjustments. In an embodiment of the present disclosure, the sealing felt 108 supports the glass preform 104 with diameter in range of 100 millimetres to 150 millimetres. However, diameter is not limited to above mentioned diameter.

In an embodiment of the present disclosure, the optical fibre draw furnace 100 facilitates in reduction of scrap. The scrap includes at least one of optical rejection, draw rejection, and pt rejection.

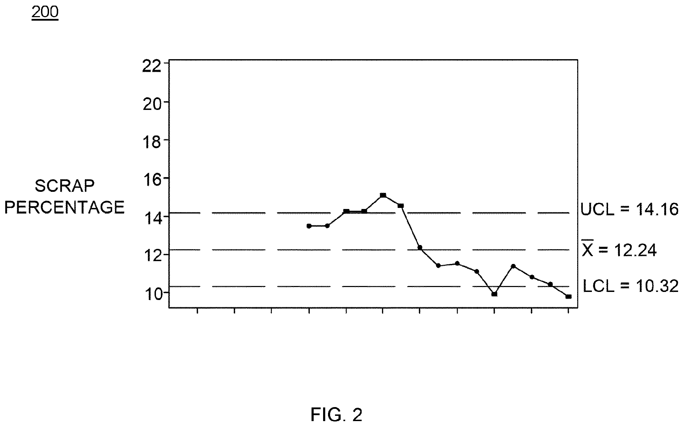

According to FIG. 2, this is a first chart 200 of scrap percentage in the optical fibre draw furnace 100, in accordance with an embodiment of the present disclosure. In an embodiment of the present disclosure, the first chart 200 is a shewhart individuals control chart. In another embodiment of the present disclosure, the first chart 200 is any suitable type of control chart.

In an embodiment of the present disclosure, the first chart 200 enables monitoring of scrap percentage per observation. In addition, the first chart 200 demonstrates scrap reduction per observation. In an embodiment of the present disclosure, the first chart 200 of scrap percentage has an upper control limit of about 14.16. In another embodiment of the present disclosure, the upper control limit of scrap percentage illustrated in the first chart 200 may vary.

In addition, the first chart 200 represents an arithmetic mean of scrap percentage as X. In an embodiment of the present disclosure, the first chart 200 of scrap percentage has the arithmetic mean X of about 12.24. In another embodiment of the present disclosure, the arithmetic mean X of scrap percentage illustrated in the first chart 200 may vary. In an embodiment of the present disclosure, the first chart 200 of scrap percentage has a lower control limit of about 10.32. In another embodiment of the present disclosure, the lower control limit of scrap percentage illustrated in the first chart 200 may vary.

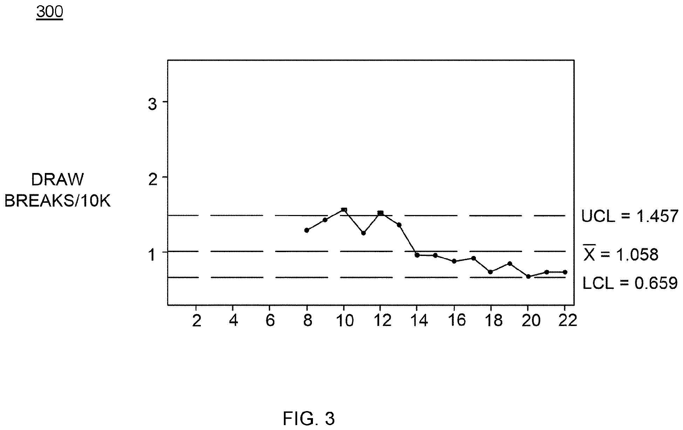

According to FIG. 3, this is a second chart 300 of drawing breaks in the optical fibre draw furnace 100, in accordance with an embodiment of the present disclosure. In an embodiment of the present disclosure, the second chart 300 is the shewhart individuals control chart. In another embodiment of the present disclosure, the second chart 300 is any suitable type of control chart.

In an embodiment of the present disclosure, the second chart 300 enables monitoring of drawing breaks per 10k kms or per 10,000 km length of optical fibre 118 observation. In addition, the second chart 300 demonstrates drawing breaks per 10k kms or per 10,000 km length of optical fibre 118. In an embodiment of the present disclosure, the second chart 300 of drawing breaks per 10k kms or per 10,000 km length of optical fibre 118 has an upper control limit of about 1.457. In another embodiment of the present disclosure, the upper control limit of drawing breaks per 10k kms or per 10,000 km length of optical fibre 118 illustrated in the second chart 300 may vary.

In addition, the second chart 300 represents an arithmetic mean of drawing breaks per 10k kms or per 10,000 km length of optical fibre 118 as X. In an embodiment of the present disclosure, the second chart 300 of drawing breaks per 10k kms or per 10,000 km length of optical fibre 118 has the arithmetic mean X of about 1.058. In another embodiment of the present disclosure, the arithmetic mean X of drawing breaks per 10k kms or per 10,000 km length of optical fibre 118 illustrated in the second chart 300 may vary. In an embodiment of the present disclosure, the second chart 300 of drawing breaks per 10k kms or per 10,000 km length of optical fibre 118 has a lower control limit of about 0.659. In another embodiment of the present disclosure, the lower control limit of drawing breaks per 10k illustrated in the second chart 300 may vary.

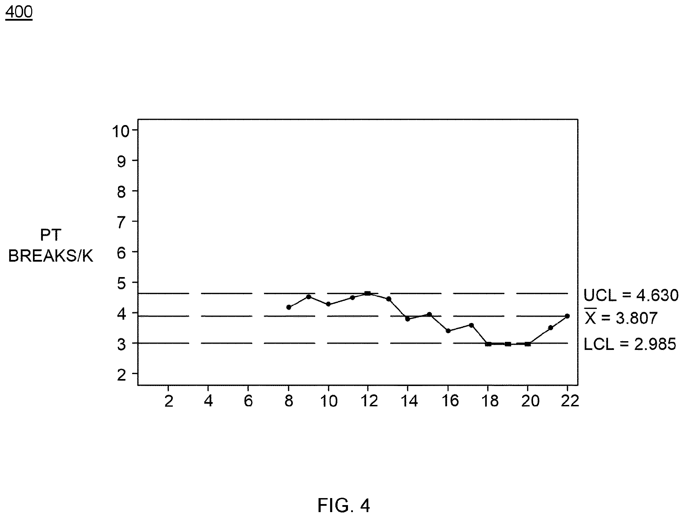

According to FIG. 4, this is a third chart 400 of PT breaks in the optical fibre draw furnace 100, in accordance with an embodiment of the present disclosure. In an embodiment of the present disclosure, the third chart 400 is the shewhart individuals control chart. In another embodiment of the present disclosure, the third chart 400 is any suitable type of control chart.

In an embodiment of the present disclosure, the third chart 400 enables monitoring of prof testing or PT breaks per km length of optical fibre 118 observation. In addition, PT breaks corresponds to parity time breaks. Further, the third chart 400 demonstrates PT breaks per km. In an embodiment of the present disclosure, the third chart 400 of PT breaks per km has an upper control limit of about 4.630. In another embodiment of the present disclosure, the upper control limit of PT breaks per k illustrated in the third chart 400 may vary.

In addition, the third chart 400 represents an arithmetic mean of PT breaks per k as X̅. In an embodiment of the present disclosure, the third chart 400 of PT breaks per km has the arithmetic mean X̅ of about 3.807. In another embodiment of the present disclosure, the arithmetic mean X̅ of PT breaks per km illustrated in the third chart 400 may vary. In an embodiment of the present disclosure, the third chart 400 of PT breaks per km has a lower control limit of about 2.985. In another embodiment of the present disclosure, the lower control limit of PT breaks per km illustrated in the third chart 400 may vary.

In an embodiment of the present disclosure, the optical fibre draw furnace 100 that includes the sealing felt 108 facilitates in reduction of scrap. The positioning of sealing felt 108 with a pre-defined distance above the optical fibre draw furnace 100 in the range of 10 centimetres to 20 centimetres reduces scrap including optical rejection scrap, draw rejection scrap, and PT rejection scrap.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

## Claims

1. An optical fibre draw furnace (100) comprising:
a hollow cylindrical structure (102), wherein the hollow cylindrical structure (102) comprising a glass preform (104) positioned inside the hollow cylindrical structure (102), wherein the glass preform (104) has diameter greater than 50 millimetres;
one or more heating elements (106), wherein the one or more heating elements (106) are situated at a periphery of the hollow cylindrical structure (102), wherein the one or more heating elements (106) are utilized for melting the glass preform (104); and
a sealing felt (108), wherein the sealing felt (108) is positioned on top of the optical fibre draw furnace (100), wherein the sealing felt (108) is positioned at a pre-defined distance above the optical fibre draw furnace (100), wherein the pre-defined distance is in a range of about 14-20 cm above the optical fibre draw furnace (100), wherein the sealing felt (108) comprising:
a first opening (110), wherein the first opening (110) is utilized to hold the glass preform (104), wherein the first opening (110) allows the glass preform (104) to be inserted in the optical fibre draw furnace (100); and
a second opening (112), wherein the second opening (112) facilitates input of plurality of gases inside the optical fibre draw furnace (100), wherein the second opening (112) facilitates in avoiding deterioration of the optical fibre draw furnace (100),
wherein the optical fibre draw furnace (100) supports high speed drawing of the glass preform (104) at drawing speed in range of about 2500 metre per second to 3500 metre per second, wherein position of the sealing felt (108) in the optical fibre draw preform facilitates in improving properties of the glass preform (104).

2. The optical fibre draw furnace (100) as recited in claim 1, wherein the sealing felt (108) is retrofitted on standard optical fibre draw furnace (100) without additional adjustments.

3. The optical fibre draw furnace (100) as recited in claim 1 or claim 2, wherein the pre-defined distance is in range of 10 centimetres to 20 centimetres above the optical fibre draw furnace (100).

4. The optical fibre draw furnace (100) as recited in any preceding claim, wherein the sealing felt (108) supports the glass preform (104) with diameter in range of about 100 millimetres to 150 millimetres.

5. The optical fibre draw furnace (100) as recited in any preceding claim, wherein the gas comprises at least one of nitrogen, helium, and argon.

6. The optical fibre draw furnace (100) as recited in any preceding claim, wherein the optical fibre draw furnace (100) facilitates in reduction of scrap, wherein the scrap comprising at least one of optical rejection, draw rejection, and prof testing rejection.

7. A sealing felt device (108) for an optical fibre draw furnace (100), the sealing felt device (108) is positioned on top of the optical fibre draw furnace (100), wherein the sealing felt device (108) is positioned at a pre-defined distance above the optical fibre draw furnace (100), wherein the sealing felt device (108) comprising:
a first opening (110) of an enclosure, wherein the first opening (110) is utilized to hold the glass preform (104), wherein the first opening (110) allows the glass preform (104) to be inserted in the optical fibre draw furnace (100); and
a second opening (112) of the enclosure, wherein the second opening (112) facilitates input of plurality of gases inside the optical fibre draw furnace (100), wherein the second opening (112) facilitates in avoiding deterioration of the optical fibre draw furnace (100).

8. The sealing felt device (108) as recited in claim 7, wherein the pre-defined distance is in a range of about 14-20 cm above the optical fibre draw furnace (100).

9. The sealing felt device (108) as recited in claim 7 or claim 8, wherein the sealing felt device (108) is retrofitted on standard optical fibre draw furnace (100) without additional adjustments.

10. The sealing felt device (108) as recited in any one of claims 7 to 9, wherein the pre-defined distance is in range of 10 centimetres to 20 centimetres above the optical fibre draw furnace (100).

11. The sealing felt device (108) as recited in any one of claims 7 to 10, wherein the sealing felt device (108) supports the glass preform (104) with diameter in range of about 100 millimetres to 400 millimetres.

12. The sealing felt device (108) as recited in any one of claims 7 to 11, wherein the optical fibre draw furnace (100) facilitates in reduction of scrap, wherein the scrap comprising at least one of optical rejection, draw rejection, and prof testing rejection.
